# EUROPEAN PATENT SPECIFICATION

(11) **EP 4 297 131 B1**
(45) Date of publication and mention of the grant of the patent: **14.10.2026**
(21) Application number: 22756340.0
(22) Date of filing: 22.02.2022
(51) Int. Cl.: H01M 4/66, H01M 4/04, H01M 4/13, H01M 10/052, H01M 10/0562, H01M 10/0565, H01M 10/0525

(54) **CONDUCTIVE UNDERCOATING AGENT**
LEITFÄHIGER GRUNDBESCHICHTUNGSSTOFF
AGENT DE SOUS-COUCHE CONDUCTEUR

(30) Priority: 22.02.2021 JP 2021026292
(43) Date of publication of application: 27.12.2023
(73) Proprietor: ADEKA CORPORATION, Arakawa-ku Tokyo 116-8554 (JP)
(72) Inventor: KAKIAGE, Kenji, Tokyo 116-8554 (JP); TANIUCHI, Ryo, Tokyo 116-8554 (JP); MACHIDA, Ryo, Tokyo 116-8554 (JP); AOYAMA, Yohei, Tokyo 116-8554 (JP); YANO, Toru, Tokyo 116-8554 (JP)
(74) Representative: Müller-Boré & Partner Patentanwälte PartG mbB
(86) International application number: PCT/JP2022/007200
(87) International publication number: WO 2022/177023

(56) References cited:
- WO-A1-2013/058347
- WO-A1-2013/058347
- WO-A1-2014/034156
- WO-A1-2019/216216
- WO-A1-2020/134749
- JP-A- 2012 156 109
- JP-A- 2012 156 109
- US-A1- 2014 205 532

## Description

### Technical Field

The present invention relates to a conductive undercoating agent to be used in, for example, a collector of an electrode of a secondary battery, and a collector for a battery, a positive electrode, a negative electrode, and a secondary battery each using the agent.

### Background Art

A nonaqueous electrolyte secondary battery such as a lithium ion secondary battery has been widely used as a power source for a portable electronic device, such as a portable personal computer, a handy video camera, or an information terminal, because the battery has a small size, a light weight, and a high energy density, and can be repeatedly charged and discharged. In addition, from the viewpoints of environmental problems, an electric vehicle using the nonaqueous electrolyte secondary battery and a hybrid car utilizing electric power as part of its motive power have been put into practical use. The nonaqueous electrolyte secondary battery has been required to have a higher output, a higher capacity, and a longer lifetime.

In the nonaqueous electrolyte secondary battery, a positive electrode, which is obtained by forming a positive electrode mixture layer containing a positive electrode active material, a conductive auxiliary, and a binding agent on a metal foil collector, and a negative electrode, which is obtained by forming a negative electrode mixture layer containing a negative electrode active material, a conductive auxiliary, and a binding agent on a metal foil collector, are used. There has been developed a nonaqueous electrolyte secondary battery, which is obtained by arranging an undercoating layer containing a conductive carbon material between the metal foil and the positive electrode mixture layer or between the metal foil and the negative electrode mixture layer (see, for example, Patent Documents 1 to 5). The arrangement of the conductive undercoating layer on the metal foil collector achieves, for example, improvements in adhesiveness and conductivity between the metal foil and the electrode mixture layer, and the alleviation of the corrosion of the metal foil, and hence reduces an internal resistance between the metal foil and the electrode mixture layer to improve the charge-discharge cycle characteristic and high-speed charge-discharge characteristic of the battery. However, further improvements in charge-discharge cycle characteristic and high-speed charge-discharge characteristic have been required for the spread of the nonaqueous electrolyte secondary battery.

Examples of the conductive carbon material to be used in the conductive undercoating layer include acetylene black, carbon black, petroleum coke, graphite, a carbon nanofiber, and a carbon nanotube (see, for example, Patent Documents 1 to 5).

### Citation List

### Patent Document

Patent Document 1: JP S63-121265 A
Patent Document 2: JP H07-201362 A
Patent Document 3: JP H10-144298 A
Patent Document 4: JP 2013-229187 A
Patent Document 5: JP 2017-174809 A
Patent Document 6: JP 2012 156109 A
Patent Document 7: US 2014/205532 A1

### Summary of Invention

### Technical Problem

However, it has been impossible to say that the related-art undercoating layer sufficiently reduces the internal resistance between the metal foil and the electrode mixture layer.

Accordingly, an object of the present invention is to provide a conductive undercoating agent that can form a conductive undercoating layer effective in reducing an internal resistance between metal foil for forming a collector and an electrode mixture layer.

### Solution to Problem

The inventors of the present invention have made extensive investigations on the above-mentioned problem, and found that the above-mentioned problem can be solved by using, as a conductive carbon material, flaked graphite whose thickness and specific surface area fall within specific ranges, to achieve the present invention.

That is, the present invention is a conductive undercoating agent, including: a conductive carbon material; a binding agent; and a solvent, wherein the conductive carbon material is flaked graphite having a carbon/oxygen element molar ratio (C/O ratio) of from 100/0 to 97/3, an average thickness of from 10 nm to 200 nm and a specific surface area of from 10 m²/g to 40 m²/g.

### Advantageous Effects of Invention

The use of the conductive undercoating agent of the present invention achieves, for example, improvements in adhesiveness and conductivity between metal foil and an electrode mixture layer, and the alleviation of the corrosion of the metal foil, and hence provides a nonaqueous electrolyte secondary battery excellent in: charge-discharge cycle characteristic, in particular, charge-discharge cycle characteristic at high voltages; overdischarge-overcharge resistance; and high-speed charge-discharge characteristic.

### Brief Description of Drawings

FIG. 1 is an example of a microphotograph of Al foil that is corroded to a small extent in the corrosion evaluation of Examples.
FIG. 2 is an example of a microphotograph of Al foil that is corroded in the corrosion evaluation of Examples.
FIG. 3 is an example of a microphotograph of Al foil that is corroded to a large extent in the corrosion evaluation of Examples.

### Description of Embodiments

### [Flaked Graphite]

A conductive undercoating agent of the present invention is characterized in that flaked graphite having a C/O ratio of from 100/0 to 97/3, an average thickness of from 10 nm to 200 nm and a specific surface area of from 10 m²/g to 40 m²/g is used as a conductive carbon material. The term "flaked graphite" refers to a substance obtained by flaking any one of graphites, the substance having a layered structure in which one to several thousands of graphite unit layers are laminated. The graphites are each a layered compound having a unit layer formed of carbon. The graphites include expanded graphite, which is obtained by expanding a space between graphite layers, and graphite oxide, which is obtained by oxidizing graphite with an oxidizing agent, in addition to graphite.

The average thickness of the flaked graphite to be used in the present invention is from 10 nm to 200 nm. In each of the case where the average thickness is less than 10 nm and the case where the average thickness is more than 200 nm, the dispersibility of the flaked graphite in an undercoating layer may reduce. The average thickness of the flaked graphite is preferably from 11 nm to 100 nm, more preferably from 12 nm to 70 nm, most preferably from 13 nm to 50 nm.

In the present invention, the thickness of the flaked graphite is a thickness in a direction perpendicular to the laminated surface of the flaked graphite, and the average thickness thereof is the average of the thicknesses of 30 or more arbitrary flaked graphite. The thickness of the flaked graphite may be measured with, for example, a SEM image obtained by photographing the flaked graphite with a scanning electron microscope. The flaked graphite formed of one unit layer is referred to as "graphene" and its thickness is theoretically about 0.335 nm.

The specific surface area of the flaked graphite to be used in the present invention is from 10 m²/g to 40 m²/g. In the present invention, the specific surface area of the flaked graphite is a value measured by a BET method, and is measured in conformity with JIS Z 8830 (determination of the specific surface area of powders (solids) by gas adsorption-BET method). In each of the case where the specific surface area of the flaked graphite is less than 10 m²/g and the case where the specific surface area is more than 40 m²/g, the dispersibility of the flaked graphite in an undercoating layer may reduce. The specific surface area of the flaked graphite is preferably from 12 m²/g to 30 m²/g, more preferably from 15 m²/g to 20 m²/g.

From the viewpoint that the dispersibility in the undercoating layer is further improved, the bulk density of the flaked graphite to be used in the present invention is preferably from 0.05 g/cm³ to 0.3 g/cm³. In the present invention, the bulk density of the flaked graphite is measured in conformity with JIS K 1469 (acetylene black for batteries). The bulk density of the flaked graphite is more preferably from 0.055 g/cm³ to 0.25 g/cm³, still more preferably from 0.06 g/cm³ to 0.20 g/cm³.

When the carbon/oxygen element molar ratio (hereinafter referred to as "C/O ratio") of the flaked graphite to be used in the present invention is high, the cycle characteristic of a battery using an electrode of the present invention may reduce. Accordingly, the C/O ratio of the flaked graphite to be used in the present invention is from 100/0 to 97/3. The C/O ratio may be calculated from the result of analysis with a CHN analyzer that can analyze oxygen. Expanded graphite or graphite oxide may be used as a raw material for the flaked graphite because such raw material is easy to flake. However, the expanded graphite or the graphite oxide has a C/O ratio higher than those of natural graphite and artificial graphite. Accordingly, when flaked graphite using the expanded graphite or the graphite oxide as its raw material is used, the flaked graphite is preferably used after having been subjected to reduction treatment for lowering its C/O ratio. A method for the reduction treatment is, for example, a heat reduction method including heating the flaked graphite under reduced pressure or under a reducing atmosphere, or a chemical reduction method including reducing the flaked graphite with a reducing substance.

When the content of iron in the flaked graphite to be used in the present invention is high, the cycle characteristic of the battery using the electrode of the present invention may reduce. Accordingly, the content of iron in the flaked graphite to be used in the present invention is preferably less than 30 ppm by mass, more preferably less than 20 ppm by mass. The flaked graphite may contain iron owing to each of, for example, the inclusion of iron, which is derived from a raw material when natural graphite or the like is used as the raw material, or iron in a step of graphitizing artificial graphite in the flaked graphite, and the inclusion of iron in a step of flaking graphite therein. When the content of iron in the flaked graphite is high, the flaked graphite is preferably used after the content of iron has been reduced by, for example, washing with an aqueous solution containing, for example, an acid, such as phosphoric acid or hydrochloric acid, a chelating agent, and a surfactant. The content of iron in the flaked graphite to be used in the present invention is preferably 1 ppm by mass or more and less than 30 ppm by mass because a reduction in content of iron in the flaked graphite requires much labor.

A method of flaking each of graphites is not particularly limited, and the graphite only needs to be flaked by applying a shear force, ultrasonic vibration, cavitation, a microwave, or the like to the graphite with a known apparatus until an average thickness, a specific surface area, and a bulk density falling within the ranges of the flaked graphite of the present invention are obtained. Examples of the apparatus to be used for the flaking of each of the graphites include: medium stirring mills, such as a sand mill, an attritor, and a bead mill; container-drive type mills each using a ball or a rod as a medium, such as a rotation mill, a vibration mill, and a planetary mill; and a jet mill, a roll mill, a hammer mill, a pin mill, a high-pressure emulsifier, an ultrasonic emulsifier, and a microwave oven. Examples of the high-pressure emulsifier include a penetration-type high-pressure emulsifier and a collision-type high-pressure emulsifier. Examples of the penetration model of the penetration-type high-pressure emulsifier include a single nozzle model and a slit nozzle model. Examples of the collision model of the collision-type high-pressure emulsifier include: a model in which a liquid containing a raw material for the flaked graphite is caused to collide with the flat surface of a valve or the like, or with the spherical surface of a ball or the like; and a model in which liquids each containing the raw material are caused to collide with each other.

When the graphites are each flaked, a wet flaking method including using a solvent and a dry flaking method in which no solvent is used may each be used, and a method for the flaking only needs to be selected in accordance with the flaking method of each apparatus.

### [Conductive Undercoating Agent]

The conductive undercoating agent of the present invention includes the above-mentioned flaked graphite, a binding agent, and a solvent. When the content of the flaked graphite in the conductive undercoating agent of the present invention is excessively small, sufficient conductivity is not obtained, and when the content is excessively large, adhesiveness between an undercoating layer and each of metal foil and an electrode mixture layer reduces. Accordingly, a mass ratio between the flaked graphite and the binding agent in the conductive undercoating agent of the present invention is preferably from 99:1 to 50:50, more preferably from 98:2 to 70:30, still more preferably from 97:3 to 80:20, most preferably from 96:4 to 85:15. The flaked graphite to be used in the present invention is excellent in dispersibility in the undercoating layer, and hence provides a conductive undercoating agent that is more excellent in adhesiveness with each of the metal foil and the electrode mixture layer than any other conductive carbon material.

Examples of the binding agent to be used in the conductive undercoating agent of the present invention include a styrene-butadiene rubber, a butadiene rubber, polyethylene, polypropylene, polyamide, polyamide imide, polyimide, polyacrylonitrile, polyurethane, polyvinylidene fluoride, polytetrafluoroethylene, an ethylene-propylene-diene rubber, a fluorine rubber, a styrene-acrylic acid ester copolymer, an ethylene-vinyl alcohol copolymer, an acrylonitrile-butadiene rubber, a styrene-isoprene rubber, polymethyl methacrylate, polyacrylate, polyacrylamide, polyvinyl alcohol, polyvinyl ether, carboxymethylcellulose, carboxymethylcellulose, methylcellulose, a cellulose nanofiber, polyethylene oxide, starch, polyvinylpyrrolidone, polyvinyl chloride, and polyacrylic acid. In the case of the binding agent having a carboxy group, such as polymethyl methacrylate, polyacrylate, or polyacrylic acid, part or the whole of the carboxy group may be neutralized with, for example, lithium or sodium. The binding agents may be used alone or in combination thereof. Of those binding agents, a binding agent containing at least one selected from the group consisting of: polyvinylidene fluoride; polytetrafluoroethylene; polyacrylic acid; a styrene-butadiene rubber; a cellulose nanofiber; and carboxymethylcellulose is preferred because an undercoating layer that is excellent in adhesiveness is obtained.

When the content of the binding agent in the conductive undercoating agent of the present invention is excessively small, the adhesiveness between the undercoating layer and each of the metal foil and the electrode mixture layer reduces, and when the content is excessively large, the content of the flaked graphite reduces. Accordingly, the content of the binding agent is preferably from 1 mass% to 50 mass%, more preferably from 2 mass% to 30 mass%, still more preferably from 3 mass% to 20 mass% with respect to components except the solvent in the conductive undercoating agent, that is, the so-called solid content of the conductive undercoating agent.

Examples of the solvent to be used in the conductive undercoating agent of the present invention include propylene carbonate, ethylene carbonate, diethyl carbonate, dimethyl carbonate, ethyl methyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methyl-2-pyrrolidone, N-ethylpyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, tetrahydrofuran, dimethyl sulfoxide, sulfolane, γ-butyrolactone, water, and an alcohol. The solvent only needs to be selected in accordance with the binding agent to be used in the conductive undercoating agent. For example, water alone or a mixed solvent of water and a water-soluble solvent only needs to be used for each of a water-soluble binding agent and a water-dispersible binding agent, and an organic solvent only needs to be used for an organic solvent-soluble binding agent. N-Methyl-2-pyrrolidone is particularly preferred as the organic solvent because N-methyl-2-pyrrolidone is excellent in solubility and drying property.

The content of the solvent in the conductive undercoating agent of the present invention may be adjusted in accordance with a method to be selected at the time of the application of the conductive undercoating agent. For example, when the conductive undercoating agent is applied by a gravure coating method, the content of the solvent is preferably from 200 parts by mass to 2,000 parts by mass, more preferably from 500 parts by mass to 1,500 parts by mass with respect to 100 parts by mass of the solid content of the conductive undercoating agent.

The conductive undercoating agent of the present invention may include any other conductive carbon material than the above-mentioned flaked graphite. Examples of the other conductive carbon material include: carbon blacks, such as furnace black, channel black, lamp black, acetylene black, thermal black, graphitized black, and ketjen black (trademark); and carbon fibers, such as a carbon nanotube and a carbon nanofiber. The graphitized black is carbon black obtained as follows: carbon black having low crystallinity is thermally treated at from 2,000°C to 3,000°C so that the crystallization of its surface may be accelerated. The other conductive carbon materials may be used alone or in combination thereof.

The average particle diameter (D₅₀) of the other conductive carbon material is preferably from 0.0001 µm to 100 µm, more preferably from 0.01 µm to 50 µm. When the content of the other conductive carbon material in the conductive undercoating agent of the present invention is excessively large, an internal resistance may increase. Accordingly, the content of the other conductive carbon material is preferably less than 10 parts by mass, more preferably less than 5 parts by mass with respect to 100 parts by mass of the flaked graphite.

The conductive undercoating agent of the present invention may include, as required, a dispersant, a cross-linking agent, a pH adjuster, an antifoaming agent, a flame retardant, a chelating agent, or the like.

A method for dispersing treatment in producing the conductive undercoating agent of the present invention is, for example, a method including using an ordinary ball mill, a sand mill, a bead mill, a cyclone mill, a pigment disperser, a mortar machine, an ultrasonic disperser, a homogenizer, a rotation-revolution mixer, a planetary mixer, Fill Mix, or Jet Paster.

### [Collector for Battery]

A collector for a battery is obtained by applying the conductive undercoating agent of the present invention onto a conductive material for an electrode collector such as metal foil and drying the applied agent to form an undercoating layer. A collector for a battery of the present invention includes: metal foil for an electrode collector; and an undercoating layer formed by applying the conductive undercoating agent of the present invention onto at least one surface of the metal foil and drying the applied agent. A material for the metal foil is, for example, titanium, a titanium alloy, aluminum, an aluminum alloy, copper, nickel, stainless steel, or nickel-plated steel. Aluminum and copper are each preferred as the material for the metal foil from the viewpoint that aluminum and copper are each excellent in conductivity and economical efficiency. In particular, when the collector for a battery of the present invention is used in a positive electrode, the material is preferably aluminum, and when the collector is used in a negative electrode, the material is preferably copper. The thickness of the metal foil is preferably from 5 µm to 100 µm. Examples of the shape of the collector include a foil shape, a plate shape, a mesh shape, a three-dimensional mesh shape, a foam shape, and a nonwoven fabric shape. The collector may be any one of a porous collector or a nonporous collector.

Although the thickness of the undercoating layer is preferably as small as possible, the thickness of the undercoating layer is preferably from 0.3 µm to 5 µm, more preferably from 0.5 µm to 3 µm because when the thickness is excessively small, a sufficient effect is hardly obtained.

A method of applying the conductive undercoating agent of the present invention to the metal foil is, for example, a gravure method, a reverse roll method, a direct roll method, a doctor blade method, a knife method, an extrusion method, a curtain method, a bar method, a dip method, a squeeze method, a die coating method, a spray method, or a wire coating method. Of those, a gravure method is preferred because a uniform coat is easily obtained even when the thickness thereof is small.

The collector for a battery of the present invention is obtained by: drying the conductive undercoating agent after the application of the conductive undercoating agent to the metal foil to form the undercoating layer; and pressing or baking the undercoating layer as required. The drying only needs to be performed by any one of such known methods as described below: drying with warm air, hot air, or low-humidity air; vacuum drying; still standing in a heating furnace or the like; and drying by the application of, for example, a far-infrared ray, an infrared ray, or an electron beam.

### [Nonaqueous Electrolyte Secondary Battery]

A nonaqueous electrolyte secondary battery of the present invention includes: a positive electrode; a negative electrode; a nonaqueous electrolyte; and a separator. The collector for a battery of the present invention may be used as each of a collector for a positive electrode and a collector for a negative electrode. In particular, the collector may be preferably used as each of: a collector for the positive electrode of a nonaqueous electrolyte secondary battery such as a lithium ion secondary battery; and a collector for the negative electrode thereof. In the nonaqueous electrolyte secondary battery of the present invention, the collector for a battery of the present invention may be used in each of both the positive electrode and the negative electrode, or may be used in one of the electrodes. When the collector for a battery of the present invention is used in the positive electrode, a slurry for forming a positive electrode mixture layer containing a positive electrode active material, a conductive auxiliary, a binding agent, and a solvent is applied onto the undercoating layer of the collector for a battery of the present invention, and is dried to form a positive electrode mixture layer. Similarly, when the collector for a battery of the present invention is used in the negative electrode, a slurry for forming a negative electrode mixture layer containing a negative electrode active material, a conductive auxiliary, a binding agent, and a solvent is applied onto the undercoating layer of the collector for a battery of the present invention, and is dried to form a negative electrode mixture layer.

### [Positive Electrode]

A positive electrode of the present invention includes: the collector for a battery of the present invention; and a positive electrode mixture layer arranged on the undercoating layer of the collector. As a positive electrode active material to be used in the positive electrode mixture layer, there are given, for example, a composite oxide of lithium and a transition metal, a lithium-containing transition metal phosphate compound, a lithium-containing silicate compound, and a sulfur-based active material. The positive electrode active materials may be used alone or in combination thereof.

The transition metal in the composite oxide of lithium and a transition metal is preferably vanadium, titanium, chromium, manganese, iron, cobalt, nickel, copper, or the like. Specific examples of the composite oxide of lithium and a transition metal include: composite oxides of lithium and cobalt such as LiCoO₂; composite oxides of lithium and nickel such as LiNiO₂; composite oxides of lithium and manganese, such as LiMnO₂, LiMn₂O₄, and Li₂MnO₃; and compounds obtained by partially substituting primary transition metal atoms of these composite oxides of lithium and transition metals with another metal, such as aluminum, titanium, vanadium, chromium, manganese, iron, cobalt, lithium, nickel, copper, zinc, magnesium, gallium, or zirconium. Specific examples of the composite oxides of lithium and transition metals having primary transition metal atoms partially substituted with another metal include Li_{1.1}Mn_{1.8}Mg_{0.1}O₄, Li_{1.1}Mn_{1.85}Al_{0.05}O₄, LiNi_{0.5}Co_{0.2}Mn_{0.3}O₂, LiNi_{0.8}Co_{0.1}Mn_{0.1}O₂, LiNi_{0.5}Mn_{0.5}O₂, LiNi_{0.80}Co_{0.17}Al_{0.03}O₂, LiNi_{0.80}Co_{0.15}Al_{0.05}O₂, Li(Ni_{1/3}Co_{1/3}Mn_{1/3})O₂, LiNi_{0.6}Co_{0.2}Mn_{0.2}O₂, LiMn_{1.8}Al_{0.2}O₄, LiNi_{0.5}Mn_{1.5}O₄, and Li₂MnO₃-LiMO₂ (M=Co, Ni, or Mn).

A transition metal in the lithium-containing transition metal phosphate compound is preferably vanadium, titanium, manganese, iron, cobalt, nickel, or the like. Specific examples of the lithium-containing transition metal phosphate compound include: iron phosphate compounds, such as LiFePO₄ and LiMnₓFe₁₋ₓPO₄ (0<x<1); iron sulfate compounds such as LiFeSO₄F; cobalt phosphate compounds such as LiCoPO₄; compounds obtained by partially substituting primary transition metal atoms of these lithium-containing transition metal phosphate compounds with another metal, such as aluminum, titanium, vanadium, chromium, manganese, iron, cobalt, lithium, nickel, copper, zinc, magnesium, gallium, zirconium, or niobium; and vanadium phosphate compounds such as Li₃V₂(PO₄)₃.

An example of the lithium-containing silicate compound is Li₂FeSiO₄.

Examples of the sulfur-based active material include elemental sulfur, a sulfur-modified organic compound, a sulfur-carbon composite, and Li₂Sₓ (x=1 to 8). The sulfur-modified organic compound is a compound obtained by modifying sulfur and an organic compound under heating in a nonoxidizing gas atmosphere at from 250°C to 600°C. Examples of the organic compound to be thermally modified with sulfur include: polyacrylonitrile; various elastomers; a pitch compound; a polynuclear aromatic ring compound; an aliphatic hydrocarbon oxide; a polyether compound; and a polyamide compound. The sulfur-carbon composite is obtained by incorporating elemental sulfur into the pores of porous carbon. The sulfur-based active material may also be used as a negative electrode active material, and when the sulfur-based active material is used as the positive electrode active material, a known negative electrode active material except the sulfur-based active material is used as the negative electrode active material.

When the particle diameter of the positive electrode active material is excessively large, a uniform and smooth electrode mixture layer is not obtained, and when the particle diameter is excessively small, the active material is liable to aggregate and hence it is difficult to turn the active material into a slurry. Accordingly, the average particle diameter (D₅₀) of the positive electrode active material is preferably from 0.5 µm to 100 µm, more preferably from 1 µm to 50 µm, still more preferably from 1 µm to 30 µm. In the present invention, the term "average particle diameter (D₅₀)" refers to a 50% particle diameter measured by a laser diffraction-light scattering method. The particle diameter is a diameter on a volume basis, and in the laser diffraction-light scattering method, the diameter of a secondary particle is measured.

As a binding agent to be used in the positive electrode mixture layer, there are given, for example, a styrene-butadiene rubber, a butadiene rubber, an acrylonitrile-butadiene rubber, an ethylene-propylene-diene rubber, a styrene-isoprene rubber, a fluorine rubber, polyethylene, polypropylene, polyacrylamide, polyamide, polyamide imide, polyimide, polyacrylonitrile, polyurethane, polyvinylidene fluoride, polytetrafluoroethylene, a styrene-acrylic acid ester copolymer, an ethylene-vinyl alcohol copolymer, polymethyl methacrylate, polyacrylate, polyvinyl alcohol, polyethylene oxide, polyvinylpyrrolidone, polyvinyl ether, polyvinyl chloride, polyacrylic acid, methylcellulose, carboxymethylcellulose, a cellulose nanofiber, and starch. In the binding agent having a carboxyl group or the like and an acidic group, part or the whole of the acidic group may be neutralized with, for example, lithium or sodium. The binding agents may be used alone or in combination thereof. In addition, the binding agent to be used in the positive electrode mixture layer may be identical to or different from the binding agent to be used in the undercoating layer.

The content of the binding agent in the positive electrode mixture layer is preferably from 1 part by mass to 30 parts by mass, more preferably from 1 part by mass to 20 parts by mass with respect to 100 parts by mass of the positive electrode active material.

As a conductive auxiliary to be used in the positive electrode mixture layer, there are given, for example: carbon materials, such as natural graphite, artificial graphite, coal tar pitch, carbon black, acetylene black, ketjen black, channel black, furnace black, lamp black, thermal black, roller black, disc black, a carbon nanotube, a vapor grown carbon fiber (VGCF), flaked graphite, graphene, fullerene, and needle coke; metal powders, such as aluminum powder, nickel powder, and titanium powder; conductive metal oxides, such as zinc oxide and titanium oxide; and sulfides, such as La₂S₃, Sm₂S₃, Ce₂S₃, and TiS₂.

The particle diameter of the conductive auxiliary to be used in the positive electrode mixture layer is preferably from 0.0001 µm to 100 µm, more preferably from 0.01 µm to 50 µm. The content of the conductive auxiliary in the positive electrode mixture layer is typically from 0.1 part by mass to 50 parts by mass, preferably from 1 part by mass to 30 parts by mass, more preferably from 2 parts by mass to 20 parts by mass with respect to 100 parts by mass of the electrode active material.

As a solvent to be used in a slurry for forming a positive electrode mixture layer, there are given, for example, propylene carbonate, ethylene carbonate, diethyl carbonate, dimethyl carbonate, ethyl methyl carbonate, 1,2-dimethoxyethane, 1,2-diethoxyethane, acetonitrile, propionitrile, tetrahydrofuran, 2-methyltetrahydrofuran, dioxane, 1,3-dioxolane, nitromethane, N-methyl-2-pyrrolidone, N,N-dimethylformamide, dimethylacetamide, methyl ethyl ketone, cyclohexanone, methyl acetate, methyl acrylate, diethyltriamine, N,N-dimethylaminopropylamine, polyethylene oxide, tetrahydrofuran, dimethyl sulfoxide, sulfolane, γ-butyrolactone, water, and an alcohol.

The kind of the solvent to be used in the slurry for forming a positive electrode mixture layer only needs to be selected in accordance with the binding agent to be used as in the case of the conductive undercoating agent. The content of the solvent in the slurry for forming a positive electrode mixture layer may be adjusted in accordance with a method to be selected at the time of the application of the slurry for forming a positive electrode mixture layer. For example, when the slurry for forming a positive electrode mixture layer is applied by a doctor blade method, the content of the solvent is preferably from 15 parts by mass to 300 parts by mass, more preferably from 30 parts by mass to 200 parts by mass with respect to 100 parts by mass of the total amount of the positive electrode active material, the binding agent, and the conductive auxiliary.

When the slurry for forming a positive electrode mixture layer containing the positive electrode active material, the conductive auxiliary, the binding agent, and the solvent is industrially produced, for example, a ball mill, a sand mill, a bead mill, a cyclone mill, a pigment disperser, a mortar machine, an ultrasonic disperser, a homogenizer, a rotation-revolution mixer, a planetary mixer, Fill Mix, or Jet Paster may be used.

A method of applying the slurry for forming a positive electrode mixture layer to the collector is, for example, a die coater method, a comma coater method, a curtain coater method, a spray coater method, a gravure coater method, a flexo coater method, a knife coater method, a doctor blade method, a reverse roll method, a brush coating method, or a dip method. The thickness of the applied layer only needs to be changed in accordance with the size and applications of the secondary battery.

The applied layer of the slurry for forming a positive electrode mixture layer applied onto the collector is dried to form the positive electrode mixture layer. The drying only needs to be performed by any one of such known methods as described below: drying with warm air, hot air, or low-humidity air; vacuum drying; still standing in a heating furnace or the like; and drying by the application of, for example, a far-infrared ray, an infrared ray, or an electron beam. After the drying of the applied layer, the positive electrode mixture layer may be pressed or baked as required.

### [Negative Electrode]

A negative electrode of the present invention includes: the collector for a battery of the present invention; and a negative electrode mixture layer arranged on the undercoating layer of the collector. As a negative electrode active material to be used in the negative electrode mixture layer, there are given, for example: carbon-based active materials, such as natural graphite, artificial graphite, non-graphitizable carbon, and graphitizable carbon; lithium-based active materials, such as lithium and a lithium alloy; silicon-based active materials, such as silicon, a silicon alloy, and silicon oxide; sulfur-based active materials; tin-based active materials, such as tin, a tin alloy, and tin oxide; metal oxides, such as copper oxide, antimony sulfide, titanium oxide, iron oxide, manganese oxide, cobalt oxide, nickel oxide, lead oxide, ruthenium oxide, tungsten oxide, and zinc oxide; phosphorus, germanium, and indium; and composite oxides, such as LiVO₂, Li₂VO₄, Li₄Ti₅O₁₂, and a titanium niobium-based oxide. The negative electrode active materials may be used alone or in combination thereof.

When the particle diameter of the negative electrode active material is excessively large, a uniform and smooth electrode mixture layer is not obtained, and when the particle diameter is excessively small, the active material is liable to aggregate and hence it is difficult to turn the active material into a slurry. Accordingly, the average particle diameter (D₅₀) of the negative electrode active material is preferably from 0.01 µm to 100 µm, more preferably from 1 µm to 50 µm, still more preferably from 1 µm to 30 µm.

Examples of a binding agent to be used in the negative electrode mixture layer include the same examples as those of the binding agent listed for the positive electrode mixture layer. The binding agents may be used alone or in combination thereof. In addition, the binding agent to be used in the negative electrode mixture layer may be identical to or different from the binding agent to be used in the undercoating layer.

The content of the binding agent in the negative electrode mixture layer is preferably from 1 part by mass to 30 parts by mass, more preferably from 1 part by mass to 20 parts by mass with respect to 100 parts by mass of the negative electrode active material.

Examples of a conductive auxiliary to be used in the negative electrode mixture layer include the same examples as those of the conductive auxiliary listed for the positive electrode mixture layer. The particle diameter of the conductive auxiliary is preferably from 0.0001 µm to 100 µm, more preferably from 0.01 µm to 50 µm. The content of the conductive auxiliary in the negative electrode mixture layer is typically from 0 parts by mass to 50 parts by mass, preferably from 0.5 part by mass to 30 parts by mass, more preferably from 1 part by mass to 20 parts by mass with respect to 100 parts by mass of the negative electrode active material. When the negative electrode active material is a carbon-based active material, the conductive auxiliary may not be incorporated in some cases.

Examples of a solvent to be used in a slurry for forming a negative electrode mixture layer include the same examples as those of the solvent listed for the slurry for forming a positive electrode mixture layer. The kind of the solvent to be used only needs to be selected in accordance with the binding agent to be used as in the case of the conductive undercoating agent. The content of the solvent in the slurry for forming a negative electrode mixture layer may be adjusted in accordance with a method to be selected at the time of the application of the slurry for forming a negative electrode mixture layer. For example, when the slurry for forming a negative electrode mixture layer is applied by a doctor blade method, the content of the solvent is preferably from 15 parts by mass to 300 parts by mass, more preferably from 30 parts by mass to 200 parts by mass with respect to 100 parts by mass of the total amount of the negative electrode active material, the binding agent, and the conductive auxiliary.

When the slurry for forming a negative electrode mixture layer containing the negative electrode active material, the conductive auxiliary, the binding agent, and the solvent is industrially produced, the same apparatus as that in the case of the slurry for forming a positive electrode mixture layer only needs to be used. A method of applying the slurry for forming a negative electrode mixture layer to the collector and a method of drying the applied slurry may be the same methods as those in the case of the slurry for forming a positive electrode mixture layer.

When the negative electrode active material is a metal or a metal alloy, such as lithium, a lithium alloy, tin, or a tin alloy, the metal or the alloy itself may be used as the negative electrode. In addition, when the metal or the alloy itself is used as the negative electrode active material, the collector may not be used because the electron conductivity of the negative electrode active material itself is high. However, a metal material that does not form any alloy with the negative electrode active material may be used as a negative electrode collector for the convenience of the configuration of the battery.

### [Nonaqueous Electrolyte]

Examples of the nonaqueous electrolyte include: a liquid electrolyte obtained by dissolving a supporting electrolyte in an organic solvent; a polymer gel electrolyte obtained by dissolving a supporting electrolyte in an organic solvent and causing the solution to gel with a polymer; a polymer-dispersed electrolyte obtained by dispersing a supporting electrolyte in a polymer free of any organic solvent; and an inorganic solid electrolyte.

For example, a hitherto known lithium salt is used as the supporting electrolyte to be used in each of the liquid electrolyte and the polymer gel electrolyte. Examples thereof include LiPF₆, LiBF₄, LiAsF₆, LiCF₃SO₃, LiCF₃CO₂, LiN(CF₃SO₂)₂, LiN(C₂F₅SO₂)₂, LiN(SO₂F)₂, LiC(CF₃SO₂)₃, LiB(CF₃SO₃)₄, LiB(C₂O₄)₂, LiBF₂(C₂O₄), LiSbF₆, LiSiF₅, LiSCN, LiClO₄, LiCl, LiF, LiBr, Lil, LiAlF₄, LiAlCl₄, LiPO₂F₂ and derivatives thereof. Of those, LiPF₆, LiBF₄, LiClO₄, LiAsF₆, LiCF₃SO₃, LiN(CF₃SO₂)₂, LiN(C₂F₅SO₂)₂, LiN(SO₂F)₂, LiC(CF₃SO₂)₃, derivatives of LiCF₃SO₃, and derivatives of LiC(CF₃SO₂)₃ are preferred. The supporting electrolytes may be used alone or in combination thereof.

The content of the supporting electrolyte in each of the liquid electrolyte and the polymer gel electrolyte is preferably from 0.5 mol/L to 7 mol/L, more preferably from 0.8 mol/L to 1.8 mol/L.

Examples of the supporting electrolyte to be used in the polymer-dispersed electrolyte include LiN(CF₃SO₂)₂, LiN(C₂F₅SO₂)₂, LiN(SO₂F)₂, LiC(CF₃SO₂)₃, LiB(CF₃SO₃)₄, and LiB(C₂O₄)₂.

Examples of the inorganic solid electrolyte include: phosphoric acid-based solid electrolytes, such as Li₁₊ₓAₓB_{2-y}(PO₄)₃ (A=Al, Ge, Sn, Hf, Zr, Sc, or Y, B=Ti, Ge, or Zn, 0<x<0.5), LiMPO₄ (M=Mn, Fe, Co, or Ni), and Li₃PO₄; lithium composite oxide-based solid electrolytes, such as Li₃XO₄ (X=As or V), Li₃₊ₓAₓB₁₋ₓO₄ (A=Si, Ge, or Ti, B=P, As, or V, 0<x<0.6), Li₄₊ₓAₓSi₁₋ₓO₄ (A=B, Al, Ga, Cr, or Fe, 0<x<0.4) (A=Ni or Co, 0<x<0.1), Li_{4-3y}Al_{y}SiO₄ (0<y<0.06), Li_{4-2y}Zn_{y}GeO₄ (0<y<0.25), LiAlO₂, Li₂BO₄, Li₄XO₄ (X=Si, Ge, or Ti), and lithium titanate (LiTiO₂, LiTi₂O₄, Li₄TiO₄, Li₂TiO₃, Li₂Ti₃O₇, or Li₄Ti₅O₁₂); compounds each containing lithium and a halogen, such as LiBr, LiF, LiCl, LiPF₆, and LiBF₄; solid electrolytes each containing lithium and nitrogen, such as LiPON, LiN(SO₂CF₃)₂, LiN(SO₂C₂F₅)₂, Li₃N, and LiN(SO₂C₃F₇)₂; solid electrolytes each having a perovskite structure having lithium ion conductivity, such as La_{0.55}Li_{0.35}TiO₃; solid electrolytes each having a garnet-type structure, such as Li₇-La₃Zr₂O₁₃; vitreous solid electrolytes, such as 50Li₄SiO₄·50Li₃BO₃; and sulfide-based solid electrolytes, such as Li₂S, Li₂S-P₂S₅, Li₂S-SiS₂, Li₂S-GeS₂, Li₂S-B₂S₅, Li₂S-P₂S₃-P₂S₅, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, and Li₃PS₄-Li₄GeS₄.

Organic solvents that have been typically used in a liquid electrolyte and a polymer gel electrolyte may be used alone or in combination thereof as the organic solvent to be used in the preparation of each of the liquid electrolyte and the polymer gel electrolyte. Specific examples of the organic solvent include a saturated cyclic carbonate compound, a saturated cyclic ester compound, a sulfoxide compound, a sulfone compound, an amide compound, a saturated chain carbonate compound, a chain ether compound, a cyclic ether compound, and a saturated chain ester compound.

Of the organic solvents, the saturated cyclic carbonate compound, the saturated cyclic ester compound, the sulfoxide compound, the sulfone compound, and the amide compound each play a role in increasing the dielectric constant of the nonaqueous electrolyte by virtue of having a high specific dielectric constant, and the saturated cyclic carbonate compound is particularly preferred.

Examples of the saturated cyclic carbonate compound include ethylene carbonate, 1,2-propylene carbonate, 1,3-propylene carbonate, 1,2-butylene carbonate, 1,3-butylene carbonate, and 1,1-dimethylethylene carbonate.

Examples of the saturated cyclic ester compound include γ-butyrolactone, γ-valerolactone, γ-caprolactone, δ-hexanolactone, and δ-octanolactone.

Examples of the sulfoxide compound include dimethyl sulfoxide, diethyl sulfoxide, dipropyl sulfoxide, diphenyl sulfoxide, and thiophene.

Examples of the sulfone compound include dimethylsulfone, diethylsulfone, dipropylsulfone, diphenylsulfone, sulfolane (also referred as tetramethylene sulfone), 3-methylsulfolane, 3,4-dimethylsulfolane, 3,4-diphenymethylsulfolane, sulfolene, 3-methylsulfolene, 3-ethylsulfolene, and 3-bromomethylsulfolene. Of those, sulfolane and tetramethylsulfolane are preferred.

Examples of the amide compound include N-methyl-2-pyrrolidone, dimethylformamide, and dimethylacetamide.

Of the organic solvents, the saturated chain carbonate compound, the chain ether compound, the cyclic ether compound, and the saturated chain ester compound can each make battery characteristics such as an output density excellent because of, for example, the following reason: each of the compounds can reduce the viscosity of the nonaqueous electrolyte, and hence can improve the mobility of an electrolyte ion. In addition, each of the compounds has a low viscosity, and hence can improve the performance of the nonaqueous electrolyte at low temperatures, and the saturated chain carbonate compound is particularly preferred.

Examples of the saturated chain carbonate compound include dimethyl carbonate, ethyl methyl carbonate, diethyl carbonate, ethyl butyl carbonate, methyl-t-butyl carbonate, diisopropyl carbonate, and t-butyl propyl carbonate.

Examples of the chain ether compound or the cyclic ether compound include dimethoxyethane, ethoxymethoxyethane, diethoxyethane, tetrahydrofuran, dioxolane, dioxane, 1,2-bis(methoxycarbonyloxy)ethane, 1,2-bis(ethoxycarbonyloxy)ethane, 1,2-bis(ethoxycarbonyloxy)propane, ethylene glycol bis(trifluoroethyl) ether, propylene glycol bis(trifluoroethyl) ether, ethylene glycol bis(trifluoromethyl) ether, and diethylene glycol bis(trifluoroethyl) ether. Of those, dioxolane is preferred.

The saturated chain ester compound is preferably a monoester compound or a diester compound having 2 to 8 carbon atoms in total in a molecule thereof. Specific examples of the compound include methyl formate, ethyl formate, methyl acetate, ethyl acetate, propyl acetate, isobutyl acetate, butyl acetate, methyl propionate, ethyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetyl, and propylene glycol diacetyl. Of those, methyl formate, ethyl formate, methyl acetate, ethyl acetate, propyl acetate, isobutyl acetate, butyl acetate, methyl propionate, and ethyl propionate are preferred.

Other examples of the organic solvent that may be used in the preparation of the nonaqueous electrolyte include acetonitrile, propionitrile, nitromethane, derivatives thereof, and various ionic liquids.

Examples of the polymer to be used in the preparation of the polymer gel electrolyte include polyethylene oxide, polypropylene oxide, polyvinyl chloride, polyacrylonitrile, polymethyl methacrylate, polyethylene, polyvinylidene fluoride, and polyhexafluoropropylene. Examples of the polymer to be used in the preparation of the polymer-dispersed electrolyte include polyethylene oxide, polypropylene oxide, and polystyrenesulfonic acid. A blending ratio between the respective components in each of the polymer gel electrolyte and the polymer-dispersed electrolyte, and a method of compositing the components are not particularly limited, and a known blending ratio and a known compositing method in the art only need to be adopted.

The nonaqueous electrolyte may contain any other known additive, such as an electrode-coating film-forming agent, an antioxidant, a flame retardant, or an overcharge inhibitor, for, for example, the lengthening of the lifetime of the battery and an improvement in safety thereof. When the other additive is used, its content is typically from 0.01 part by mass to 10 parts by mass, preferably from 0.1 part by mass to 5 parts by mass with respect to 100 parts by mass of the nonaqueous electrolyte.

A polymer microporous film or a nonwoven fabric typically used in a nonaqueous electrolyte secondary battery may be used as the separator without any particular limitation. Examples of the film include films formed of polymer compounds containing, as main components, for example, any of: polyethylene, polypropylene, polyvinylidene fluoride, polyvinylidene chloride, polyacrylonitrile, polyacrylamide, polytetrafluoroethylene, polysulfone, polyethersulfone, polycarbonate, polyamide, and polyimide; polyethers, such as polyethylene oxide and polypropylene oxide; various celluloses, such as carboxymethylcellulose and hydroxypropylcellulose; poly(meth)acrylic acid and various esters thereof; derivatives thereof, copolymers thereof, and mixtures thereof. Those films may each be coated with a ceramic material, such as alumina or silica, magnesium oxide, an aramid resin, or polyvinylidene fluoride.

Those films may be used alone, or those films may be superimposed on each other to be used as a multi-layered film. Further, various additives may be used in each of those films, and their kinds and contents are not particularly limited. Of those films, a film formed of polyethylene, polypropylene, polyvinylidene fluoride, or polysulfone is preferably used for the secondary battery to be manufactured by a method of manufacturing the secondary battery. When the nonaqueous electrolyte is a polymer-dispersed electrolyte or an inorganic solid electrolyte, the separator may not be incorporated.

The shape of the secondary battery is not particularly limited, and various shapes, such as a coin shape, a cylindrical shape, an angular shape, and a laminated shape, may each be adopted.

A laminated film or a metal container may be used as an exterior member for the secondary battery. The thickness of the exterior member is typically 0.5 mm or less, preferably 0.3 mm or less. Examples of the shape of the exterior member include a flat shape (thin shape), an angular shape, a cylindrical shape, a coin shape, and a button shape.

A multilayer film including a metal layer between resin films may be used as the laminated film. The metal layer is preferably aluminum foil or aluminum alloy foil for a weight reduction. For example, a polymer material, such as polypropylene, polyethylene, nylon, or polyethylene terephthalate, may be used for the resin film. The laminated film may be sealed through thermal fusion and formed into the shape of the exterior member.

The metal container may be formed of, for example, stainless steel, aluminum, or an aluminum alloy. The aluminum alloy is preferably an alloy containing an element, such as magnesium, zinc, or silicon. When the content of a transition metal, such as iron, copper, nickel, or chromium, in aluminum or the aluminum alloy is set to 1% or less, the long-term reliability and heat-radiating property of the container under a high-temperature environment can be drastically improved.

### [All-solid-state Secondary Battery]

The collector of the present invention may be used as a collector for an all-solid-state secondary battery. The all-solid-state secondary battery is a secondary battery using the inorganic solid electrolyte as its electrolyte. The inorganic solid electrolyte is preferably a sulfide-based solid electrolyte because of its excellent adhesiveness with the collector of the present invention. In the all-solid-state secondary battery, a positive electrode layer, a solid electrolyte layer, and a negative electrode layer are laminated, and the positive electrode layer and the negative electrode layer each include a collector.

The solid electrolyte layer is a layer formed of a solid electrolyte, and the thickness of the solid electrolyte layer is preferably from 0.001 mm to 1 mm. The positive electrode layer is a layer including a positive electrode active material and the solid electrolyte, and may further include a conductive auxiliary, a binding agent, or the like. A ratio "positive electrode active material:solid electrolyte" between the positive electrode active material and solid electrolyte of the positive electrode layer falls within the range of preferably from 9:1 to 2:8, more preferably from 8:2 to 4:6 in terms of mass ratio. The negative electrode layer is a layer including a negative electrode active material and the solid electrolyte, and may further include a conductive auxiliary, a binding agent, or the like. A ratio "negative electrode active material:solid electrolyte" between the negative electrode active material and solid electrolyte of the negative electrode layer falls within the range of preferably from 9:1 to 2:8, more preferably from 8:2 to 4:6 in terms of mass ratio.

### Examples

Hereinafter, the present invention is described in more detail by way of Examples and Comparative Examples. However, the present invention is not limited to Examples below. "Part(s)" and "%" in Examples are by mass unless otherwise specified.

### [Conductive Carbon Material]

Conductive carbon material B1: scaly graphite: average thickness: 250 nm, specific surface area: 11 m²/g, bulk density: 0.35 g/cm³, C/O ratio: 98/2, content of iron: 50 ppm
Conductive carbon material B2: acetylene black: average particle diameter: 35 nm, specific surface area: 68 m²/g, bulk density: 0.04 g/cm³
Conductive carbon material B3: multilayer carbon nanotube: diameter: 10 nm, average length: 1.5 µm, specific surface area: 280 m²/g, bulk density: 0.03 g/cm³

### [Production Example 1]

A conductive carbon material A1 was prepared from the conductive carbon material B1 in conformity with Working Example 1 of WO 2016/148252 A1. That is, 74 parts by mass of 1-butyl-3-methylimidazolium hexafluorophosphate and 26 parts by mass of polyethylene glycol (manufactured by FUJIFILM Wako Pure Chemical Corporation, product name: Polyethylene Glycol 20000) were mixed, and the mixture was dissolved by heating, followed by the dispersion of 10 parts by mass of the conductive carbon material B1 therein. 0.6 Gram of the dispersion liquid was collected in a 0.5-cubic centimeter vial bottle, and the bottle was lidded. After that, a microwave having a frequency of 2,450 MHz was applied to the dispersion liquid with a microwave synthesizer (Initiator+ manufactured by Biotage Japan Ltd.) at 175°C for 60 minutes. After that, the dispersion liquid was washed with acetone, and was filtered, followed by drying by heating in an oven. Thus, the conductive carbon material A1 that was flaked graphite was obtained.

### [Production Example 2]

5 Parts by mass of the conductive carbon material A1 was added to 100 parts by mass of a 5 mass% aqueous solution of phosphoric acid, and the mixture was stirred at 90°C for 2 hours. After that, the mixture was filtered, and the filtrate was rinsed with water until the filtrate became neutral, followed by drying. Thus, a conductive carbon material A2 that was flaked graphite was obtained.

### [Production Example 3]

A conductive carbon material A3 that was flaked graphite was obtained by performing the same operations as those of Production Example 2 except that in Production Example 2, a 10 mass% aqueous solution of phosphoric acid was used instead of the 5 mass% aqueous solution of phosphoric acid.

### [Production Example 4]

5 Parts by mass of the conductive carbon material B1 was added to 100 parts by mass of a 5 mass% aqueous solution of phosphoric acid, and the mixture was stirred at 90°C for 2 hours. After that, the mixture was filtered, and the filtrate was rinsed with water until the filtrate became neutral, followed by drying. Thus, a conductive carbon material B4 was obtained.

### [Production Example 5]

15 Parts by mass of the flaked graphite A2 was added to 100 parts by mass of distilled water, and the mixture was circulated with a bead mill (manufactured by Kotobuki Industries, product name: UAM-015) at a liquid temperature of 25°C three times. 450 Parts by mass of zirconia beads each having a diameter of 0.1 mm were used as beads. The beads were removed from the resultant dispersion liquid, and the dispersion liquid was filtered, followed by drying by heating in an oven. Thus, black powder was obtained. 5 Parts by mass of the resultant black powder was added to 100 parts by mass of a 5 mass% aqueous solution of phosphoric acid, and the mixture was stirred at 90°C for 2 hours. After that, the mixture was filtered, and the filtrate was rinsed with water until the filtrate became neutral, followed by drying. Thus, flaked graphite B5 was obtained.

### Reference [Production Example 6]

Black powder was obtained by performing the same operations as those of Production Example 1 except that in Production Example 1, expanded graphite (average thickness: 243 nm, specific surface area: 17 m²/g, bulk density: 0.35 g/cm³, C/O ratio: 98/2, content of iron: 481 ppm) was used instead of the conductive carbon material B1. 5 Parts by mass of the resultant black powder was added to 100 parts by mass of a 10 mass% aqueous solution of phosphoric acid, and the mixture was stirred at 90°C for 4 hours. After that, the mixture was filtered, and the filtrate was rinsed with water until the filtrate became neutral, followed by drying. Thus, flaked graphite A4, which is not an embodiment of the invention, was obtained.

The analysis values of the average thicknesses, specific surface areas, bulk densities, C/O ratios, and the contents of iron in the conductive carbon materials A1 to A3, Reference A4, and B4 and B5 are shown in Table 1.

**Table 1**

| Conductive carbon material | Average thickness (nm) | Specific surface area (m²/g) | Bulk density (g/cm³) | C/O ratio | Content of iron (ppm by mass) |
|---|---|---|---|---|---|
| A1 | 38 | 18 | 0.07 | 98/2 | 50 |
| A2 | 38 | 18 | 0.07 | 98/2 | 15 |
| A3 | 38 | 18 | 0.07 | 98/2 | 5 |
| A4 | 38 | 20 | 0.07 | 93/7 | 14 |
| B4 | 250 | 11 | 0.35 | 98/2 | 15 |
| B5 | 15 | 43 | 0.04 | 98/2 | 20 |

### [Preparation of Conductive Undercoating Agent]

Conductive undercoating agents of Examples 1 to 7 and Comparative Examples 1 to 5 were prepared by the following method through use of the conductive carbon materials A1 to A4 and B1 to B5. Examples 4, 6, and 7 are not according to the invention. Correspondences between the prepared conductive undercoating agents and the used conductive carbon materials are shown in Table 2. When the conductive carbon materials were used as a mixture, their mass ratio was shown.

95.0 Parts by mass of each of the conductive carbon materials, 5.0 parts by mass of polyvinylidene fluoride (manufactured by Kureha Corporation) serving as a binding agent, and 900 parts by mass of N-methyl-2-pyrrolidone serving as a solvent were used, and were mixed with a rotation-revolution mixer under the conditions of a revolution speed of 1,000 rpm and a rotation speed of 500 rpm for 60 minutes.
Thus, each of the conductive undercoating agents was prepared.

**Table 2**

| Conductive undercoating agent | Conductive carbon material |
|---|---|
| Example 1 | A1 |
| Example 2 | A2 |
| Example 3 | A3 |
| Example 4 | A4 |
| Example 5 | A2/B2=97/3 |
| Example 6 | A2/B2=93/7 |

| Example 7 | A2/B2=85/15 |
|---|---|
| Comparative Example 1 | B1 |
| Comparative Example 2 | B2 |
| Comparative Example 3 | B3 |
| Comparative Example 4 | B4 |
| Comparative Example 5 | B5 |

### [Production of Collector]

Collectors of Examples 1-Al to 7-Al and Comparative Examples 1-Al to 5-Al were produced by the following method through use of the conductive undercoating agents of Examples 1 to 7 and Comparative Examples 1 to 5. Correspondences between the produced collectors and the used conductive undercoating agents are shown in Table 3.

Each of the conductive undercoating agents was applied to one surface of aluminum foil (thickness: 15 µm) for a collector by a gravure coating method, and was dried at 90°C, followed by press molding. The thickness of the resultant undercoating layer was 1 µm.

**Table 3**

| Collector | Conductive undercoating agent |
|---|---|
| Example 1-Al | Example 1 |
| Example 2-Al | Example 2 |
| Example 3-Al | Example 3 |
| Example 4-Al | Example 4 |
| Example 5-Al | Example 5 |
| Example 6-Al | Example 6 |
| Example 7-Al | Example 7 |
| Comparative Example 1-Al | Comparative Example 1 |
| Comparative Example 2-Al | Comparative Example 2 |
| Comparative Example 3-Al | Comparative Example 3 |
| Comparative Example 4-Al | Comparative Example 4 |
| Comparative Example 5-Al | Comparative Example 5 |

Collectors of Examples 1-Cu to 7-Cu and Comparative Examples 1-Cu to 5-Cu were produced by the following method through use of the conductive undercoating agents of Examples 1 to 7 and Comparative Examples 1 to 5. Correspondences between the produced collectors and the used conductive undercoating agents are shown in Table 4.

Each of the conductive undercoating agents was applied to one surface of copper foil (thickness: 10 µm) for a collector by a gravure coating method, and was dried at 90°C, followed by press molding. The thickness of the resultant undercoating layer was 1 µm.

**Table 4**

| Collector | Conductive undercoating agent |
|---|---|
| Example 1-Cu | Example 1 |
| Example 2-Cu | Example 2 |
| Example 3-Cu | Example 3 |
| Example 4-Cu | Example 4 |
| Example 5-Cu | Example 5 |
| Example 6-Cu | Example 6 |
| Example 7-Cu | Example 7 |
| Comparative Example 1-Cu | Comparative Example 1 |
| Comparative Example 2-Cu | Comparative Example 2 |
| Comparative Example 3-Cu | Comparative Example 3 |
| Comparative Example 4-Cu | Comparative Example 4 |
| Comparative Example 5-Cu | Comparative Example 5 |

### [Test 1: High-speed Charge-discharge Test]

### [Production of Positive Electrode]

Positive electrodes of Examples 8 to 14 and Comparative Examples 6 to 11 were produced by the following method through use of the collectors of Examples 1-Al to 7-Al, the collectors of Comparative Examples 1-Al to 5-Al, and aluminum foil (thickness: 15 µm, hereinafter referred to as "Al foil") as collectors.

### Examples 11, 13, and 14 are not according to the invention.

Correspondences between the produced positive electrodes and the used collectors are shown in Table 5.

93.0 Parts by mass of LiFePO₄ serving as a positive electrode active material, 3.5 parts by mass of acetylene black (manufactured by Denka Company Limited) serving as a conductive auxiliary, 3.5 parts by mass of polyvinylidene fluoride (manufactured by Kureha Corporation) serving as a binding agent, and 60 parts by mass of N-methyl-2-pyrrolidone serving as a solvent were used, and were mixed with a rotation-revolution mixer under the conditions of a revolution speed of 1,000 rpm and a rotation speed of 500 rpm for 60 minutes. Thus, a slurry for forming a positive electrode mixture layer was prepared. The slurry for forming a positive electrode mixture layer was applied to the undercoating layer side of each of the collectors including undercoating layers, or only to one surface of the aluminum foil, by a doctor blade method, and was dried at 90°C for 1 hour, followed by press molding. After that, the electrode was cut into a predetermined size, and was dried in a vacuum at 120°C for 2 hours. Thus, a disc-shaped positive electrode was produced.

**Table 5**

| Positive electrode | Collector |
|---|---|
| Example 8 | Example 1-Al |
| Example 9 | Example 2-Al |
| Example 10 | Example 3-Al |
| Example 11 | Example 4-Al |
| Example 12 | Example 5-Al |
| Example 13 | Example 6-Al |
| Example 14 | Example 7-Al |
| Comparative Example 6 | Comparative Example 1-Al |
| Comparative Example 7 | Comparative Example 2-Al |
| Comparative Example 8 | Comparative Example 3-Al |
| Comparative Example 9 | Comparative Example 4-Al |
| Comparative Example 10 | Comparative Example 5-Al |
| Comparative Example 11 | Al foil |

### [Production of Negative Electrode]

Negative electrodes of Examples 15 to 21 and Comparative Examples 12 to 17 were produced by the following method through use of the collectors of Examples 1-Cu to 7-Cu, the collectors of Comparative Examples 1-Cu to 5-Cu, and copper foil (thickness: 10 µm) as collectors. Examples 18, 20, and 21 are not according to the invention. Correspondences between the produced negative electrodes and the used collectors are shown in Table 6.

96.0 Parts by mass of artificial graphite serving as a negative electrode active material, 1.0 part by mass of acetylene black (manufactured by Denka Company Limited) serving as a conductive auxiliary, 3.0 parts by mass of polyvinylidene fluoride (manufactured by Kureha Corporation) serving as a binding agent, and 60 parts by mass of N-methyl-2-pyrrolidone serving as a solvent were used, and were mixed with a rotation-revolution mixer under the conditions of a revolution speed of 1,000 rpm and a rotation speed of 500 rpm for 60 minutes. Thus, a slurry for forming a negative electrode mixture layer was prepared. The slurry for forming a positive electrode mixture layer was applied to the undercoating layer side of each of the collectors including undercoating layers, or only to one surface of the copper foil, by a doctor blade method, and was dried at 90°C for 1 hour, followed by press molding. After that, the electrode was cut into a predetermined size, and was dried in a vacuum at 120°C for 2 hours. Thus, a disc-shaped negative electrode was produced.

**Table 6**

| Negative electrode | Collector |
|---|---|
| Example 15 | Example 1-Cu |
| Example 16 | Example 2-Cu |
| Example 17 | Example 3-Cu |
| Example 18 | Example 4-Cu |
| Example 19 | Example 5-Cu |
| Example 20 | Example 6-Cu |
| Example 21 | Example 7-Cu |
| Comparative Example 12 | Comparative Example 1-Cu |
| Comparative Example 13 | Comparative Example 2-Cu |
| Comparative Example 14 | Comparative Example 3-Cu |
| Comparative Example 15 | Comparative Example 4-Cu |
| Comparative Example 16 | Comparative Example 5-Cu |
| Comparative Example 17 | Copper foil |

### [Preparation of Nonaqueous Electrolyte A]

LiPF₆ was dissolved in a mixed solvent formed of 30 vol% of ethylene carbonate and 70 vol% of ethyl methyl carbonate at a concentration of 1.0 mol/L to prepare an electrolyte solution. 1.0 Mass percent of vinylene carbonate was added to the electrolyte solution to prepare a nonaqueous electrolyte A.

### [Assembly of Battery]

A positive electrode and a negative electrode were used in combination as shown in Table 7 below, and were held in a case while a separator (product name: CELGARD (trademark) 2325) was sandwiched therebetween. After that, the nonaqueous electrolyte A was injected into the case, and the case was tightly closed and sealed with a caulking machine. Thus, a nonaqueous electrolyte secondary battery (coin shape having a diameter of 20 mm and a thickness of 3.2 mm) of each of Examples 22 to 28 and Comparative Examples 18 to 23 was produced. Symbols and numerical values in parentheses in the column "Positive electrode" in Table 7 represent conductive carbon materials used in the undercoating layers of the positive electrodes.

A charge-discharge test was performed by the following method through use of each of the nonaqueous electrolyte secondary batteries of Examples 22 to 28 and Comparative Examples 18 to 23, and their discharge capacities and discharge capacity ratios were measured. Examples 25, 27, and 28 are not according to the invention. The results are shown in Table 7. A larger value of the discharge capacity ratio means a more excellent cycle characteristic in high-speed charge-discharge.

### [Charge-discharge Test Method]

Each of the nonaqueous electrolyte secondary batteries was loaded into a thermostat at 30°C, and 10 cycles of a charge-discharge test at a charge rate of 0.2 C and a discharge rate of 0.2 C were performed while a charge final voltage was set to 3.60 V and a discharge final voltage was set to 2.00 V. After that, 1,000 cycles of a charge-discharge test at a charge rate of 2.0 C and a discharge rate of 2.0 C were performed. The discharge capacity (mAh/g) of the battery per weight of the positive electrode thereof in the tenth charge-discharge cycle at 2.0 C, and the ratio (%) of the discharge capacity thereof in the 1,000th cycle to the discharge capacity in the tenth charge-discharge cycle at 2.0 C were calculated.

**Table 7**

| Secondary battery | Positive electrode | Negative electrode | Discharge capacity (mAh/g) | Discharge capacity ratio (%) |
|---|---|---|---|---|
| Example 22 | Example 8 (A1) | Comparative Example 17 | 151 | 82 |
| Example 23 | Example 9 (A2) | Comparative Example 17 | 151 | 85 |
| Example 24 | Example 10 (A3) | Comparative Example 17 | 151 | 88 |
| Example 25 | Example 11 (A4) | Comparative Example 17 | 149 | 85 |
| Example 26 | Example 12 (A2/B2=97/3) | Comparative Example 17 | 151 | 85 |
| Example 27 | Example 13 (A2/B2=93/7) | Comparative Example 17 | 150 | 83 |
| Example 28 | Example 14 (A2/B2=85/15) | Comparative Example 17 | 149 | 82 |
| Comparative Example 18 | Comparative Example 6 (B1) | Comparative Example 17 | 145 | 76 |
| Comparative Example 19 | Comparative Example 7 (B2) | Comparative Example 17 | 146 | 81 |
| Comparative Example 20 | Comparative Example 8 (B3) | Comparative Example 17 | 148 | 77 |
| Comparative Example 21 | Comparative Example 9 (B4) | Comparative Example 17 | 145 | 80 |
| Comparative Example 22 | Comparative Example 10 (B5) | Comparative Example 17 | 148 | 78 |
| Comparative Example 23 | Comparative Example 11 | Comparative Example 17 | 140 | 75 |

It is found that the values of the discharge capacity ratios of the nonaqueous electrolyte secondary batteries of Examples 22 to 28 including positive electrodes each using the conductive undercoating agent of the present invention are each larger than those of the nonaqueous electrolyte secondary batteries of Comparative Examples 18 to 23, and hence the former batteries are each excellent in cycle characteristic in high-speed charge-discharge.

### [Test 2: High-voltage Charge-discharge Test]

### [Production of Positive Electrode]

Positive electrodes of Examples 29 to 35 and Comparative Examples 24 to 29 were produced by the following method through use of the collectors of Examples 1-Al to 7-Al, the collectors of Comparative Examples 1-Al to 5-Al, and Al foil as collectors. Examples 32, 34, and 35 are not according to the invention.

Correspondences between the produced positive electrodes and the used collectors are shown in Table 8.

90.0 Parts by mass of Li(Ni_{0.5}Mn_{1.5})O₄ serving as a positive electrode active material, 5.0 parts by mass of acetylene black (manufactured by Denka Company Limited) serving as a conductive auxiliary, 5.0 parts by mass of polyvinylidene fluoride (manufactured by Kureha Corporation) serving as a binding agent, and 40 parts by mass of N-methyl-2-pyrrolidone serving as a solvent were used, and were mixed with a rotation-revolution mixer under the conditions of a revolution speed of 1,000 rpm and a rotation speed of 500 rpm for 60 minutes. Thus, a slurry for forming a positive electrode mixture layer was prepared. The slurry for forming a positive electrode mixture layer was applied to the undercoating layer side of each of the collectors including undercoating layers, or only to one surface of the Al foil, by a doctor blade method, and was dried at 90°C for 1 hour, followed by press molding. After that, the electrode was cut into a predetermined size, and was dried in a vacuum at 120°C for 2 hours. Thus, a disc-shaped positive electrode was produced.

**Table 8**

| Positive electrode | Collector |
|---|---|
| Example 29 | Example 1-Al |
| Example 30 | Example 2-Al |
| Example 31 | Example 3-Al |
| Example 32 | Example 4-Al |
| Example 33 | Example 5-Al |
| Example 34 | Example 6-Al |
| Example 35 | Example 7-Al |
| Comparative Example 24 | Comparative Example 1-Al |
| Comparative Example 25 | Comparative Example 2-Al |
| Comparative Example 26 | Comparative Example 3-Al |
| Comparative Example 27 | Comparative Example 4-Al |
| Comparative Example 28 | Comparative Example 5-Al |
| Comparative Example 29 | Al foil |

### [Preparation of Nonaqueous Electrolyte B]

LiPF₆ and LiN(SO₂F)₂ were dissolved in a mixed solvent formed of 15 vol% of ethylene carbonate and 85 vol% of diethyl carbonate at a concentration of 0.5 mol/L and 0.5 mol/L, respectively, to prepare an electrolyte solution. 1.0 Mass percent of vinylene carbonate was added to the electrolyte solution to prepare a nonaqueous electrolyte B. In the nonaqueous electrolyte B, to enlarge an influence of high-voltage charge-discharge on the Al foil, the blending amounts of LiPF₆ serving as an electrolyte in an electrolytic solution and ethylene carbonate serving as a solvent are reduced as compared to those of the nonaqueous electrolyte A.

### [Assembly of Battery]

A positive electrode and a negative electrode were used in combination as shown in Table 9 below, and were held in a case while a separator (product name: CELGARD (trademark) 2325) was sandwiched therebetween. After that, the nonaqueous electrolyte B was injected into the case, and the case was tightly closed and sealed with a caulking machine. Thus, a nonaqueous electrolyte secondary battery (coin shape having a diameter of 20 mm and a thickness of 3.2 mm) of each of Examples 36 to 42 and Comparative Examples 30 to 35 was produced. Symbols and numerical values in parentheses in the column "Positive electrode" in Table 9 represent conductive carbon materials used in the undercoating layers of the positive electrodes.

A high-voltage charge-discharge test was performed by the following method through use of each of the nonaqueous electrolyte secondary batteries of Examples 36 to 42 and Comparative Examples 30 to 35, and their discharge capacity ratios were calculated. Examples 39, 41, and 42 are not according to the invention. In addition, each of the nonaqueous electrolyte secondary batteries after the test was disassembled, and the corrosion of its positive electrode was evaluated by the following method. The results are shown in Table 9. A larger value of the discharge capacity ratio means a more excellent cycle characteristic in the high-voltage charge-discharge.

### [High-voltage Charge-discharge Test Method]

Each of the nonaqueous electrolyte secondary batteries was loaded into a thermostat at 30°C, and 100 cycles of a charge-discharge test at a charge rate of 0.2 C and a discharge rate of 0.2 C were performed while a charge final voltage was set to 5.10 V and a discharge final voltage was set to 3.50 V. The ratio (%) of the discharge capacity of the battery in the 100th cycle to the discharge capacity thereof in the fifth charge-discharge cycle was adopted as a discharge capacity ratio (%).

### [Method of evaluating Corrosion]

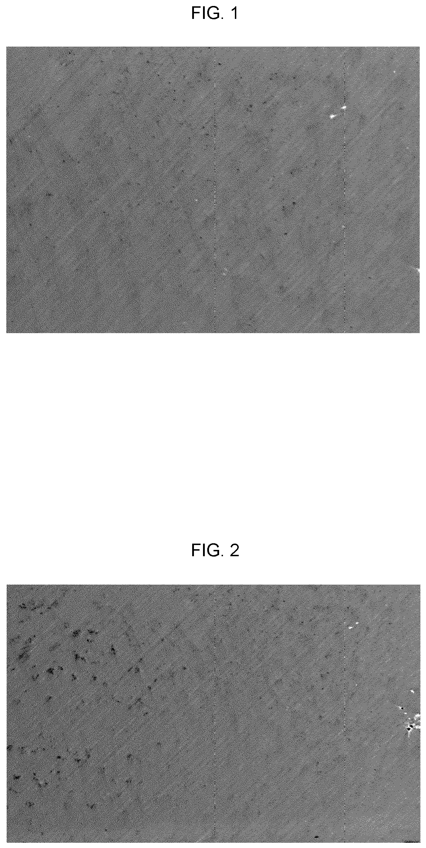

Each of the positive electrodes removed from the nonaqueous electrolyte secondary batteries after the charge-discharge test was immersed in N-methyl-2-pyrrolidone serving as a solvent so that its positive electrode mixture layer and undercoating layer were dissolved therein. The remaining Al foil was observed with a microscope, and was evaluated for its corrosion by the following criteria. As a reference, a microphotograph of the Al foil corresponding to each of the criteria is shown in each of FIGS. 1 to 3.
∘: No pitting is observed, or a pitting is observed only slightly and hence the foil is corroded to a small extent.
Δ: A small number of pittings are observed in part of the foil, and hence the foil is corroded.
×: Many pittings are observed in the entire surface of the foil, and hence the foil is corroded to a large extent.

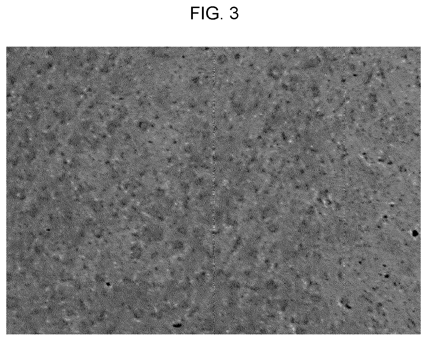

FIG. 1 is an example of a microphotograph of the Al foil whose evaluation result is "o" in the corrosion evaluation. FIG. 2 is an example of a microphotograph of the Al foil whose evaluation result is "Δ" in the corrosion evaluation. FIG. 3 is an example of a microphotograph of the Al foil whose evaluation result is "×" in the corrosion evaluation.

**Table 9**

| Secondary battery | Positive electrode | Negative electrode | Discharge capacity ratio (%) | Corrosion evaluation |
|---|---|---|---|---|
| Example 36 | Example 29 (A1) | Comparative Example 17 | 90 | ○ |
| Example 37 | Example 30 (A2) | Comparative Example 17 | 92 | ○ |
| Example 38 | Example 31 (A3) | Comparative Example 17 | 93 | ○ |
| Example 39 | Example 32 (A4) | Comparative Example 17 | 90 | ○ |
| Example 40 | Example 33 (A2/B2=97/3) | Comparative Example 17 | 91 | ○ |
| Example 41 | Example 34 (A2/B2=93/7) | Comparative Example 17 | 89 | ○ |
| Example 42 | Example 35 (A2/B2=85/15) | Comparative Example 17 | 88 | ○ |
| Comparative Example 30 | Comparative Example 24 (B1) | Comparative Example 17 | 72 | Δ |
| Comparative Example 31 | Comparative Example 25 (B2) | Comparative Example 17 | 85 | Δ |
| Comparative Example 32 | Comparative Example 26 (B3) | Comparative Example 17 | 77 | Δ |
| Comparative Example 33 | Comparative Example 27 (B4) | Comparative Example 17 | 75 | Δ |
| Comparative Example 34 | Comparative Example 28 (B5) | Comparative Example 17 | 85 | Δ |
| Comparative Example 35 | Comparative Example 29 | Comparative Example 17 | 70 | × |

It is found that the values of the discharge capacity ratios of the nonaqueous electrolyte secondary batteries of Examples 36 to 42 including positive electrodes each using the conductive undercoating agent of the present invention are each larger than those of the nonaqueous electrolyte secondary batteries of Comparative Examples 30 to 35, and hence the former batteries are each excellent in cycle characteristic in high-voltage charge-discharge. In addition, it is assumed from the presence or absence of the corrosion of the Al foil after the test that differences in cycle characteristic between Examples and Comparative Examples result from the property of the conductive undercoating agent of the present invention by which the corrosion of the Al foil is prevented.

### [Test 3: Acid Resistance Test]

### [Production of Positive Electrode]

Positive electrodes of Examples 43 to 49 and Comparative Examples 36 to 41 were produced by the following method through use of the collectors of Examples 1-Al to 7-Al, the collectors of Comparative Examples 1-Al to 5-Al, and Al foil as collectors. Examples 46, 48, and 49 are not according to the invention. Correspondences between the produced positive electrodes and the used collectors are shown in Table 10.

90.0 Parts by mass of sulfur-modified polyacrylonitrile (manufactured by Adeka Corporation, content of sulfur: 37 mass%, average particle diameter: 10 µm) serving as a positive electrode active material, 5.0 parts by mass of acetylene black (manufactured by Denka Company Limited) serving as a conductive auxiliary, 2.0 parts by mass of a styrene-butadiene rubber (40 mass% aqueous dispersion liquid, manufactured by Zeon Corporation) and 3.0 parts by mass of sodium carboxymethylcellulose (manufactured by Daicel FineChem Ltd.) serving as binding agents, and 120 parts by mass of water serving as a solvent were used, and were mixed with a rotation-revolution mixer under the conditions of a revolution speed of 1,000 rpm and a rotation speed of 500 rpm for 60 minutes. Thus, a slurry for forming a positive electrode mixture layer was prepared. The pH of the slurry for forming a positive electrode mixture layer was 4.1. The slurry for forming a positive electrode mixture layer was applied to the undercoating layer side of each of the collectors including undercoating layers, or only to one surface of the aluminum foil, by a doctor blade method, and was dried at 90°C for 1 hour, followed by press molding. After that, the electrode was cut into a predetermined size, and was dried in a vacuum at 120°C for 2 hours. Thus, a disc-shaped positive electrode was produced.

**Table 10**

| Positive electrode | Collector |
|---|---|
| Example 43 | Example 1-Al |
| Example 44 | Example 2-Al |
| Example 45 | Example 3-Al |
| Example 46 | Example 4-Al |
| Example 47 | Example 5-Al |
| Example 48 | Example 6-Al |
| Example 49 | Example 7-Al |
| Comparative Example 36 | Comparative Example 1-Al |
| Comparative Example 37 | Comparative Example 2-Al |
| Comparative Example 38 | Comparative Example 3-Al |
| Comparative Example 39 | Comparative Example 4-Al |
| Comparative Example 40 | Comparative Example 5-Al |
| Comparative Example 41 | Al foil |

### [Assembly of Battery]

A positive electrode and a negative electrode (500-micrometer thick lithium metal cut into a disc shape) were used in combination as shown in Table 11 below, and were held in a case while a glass filter was sandwiched as a separator therebetween. After that, the nonaqueous electrolyte A was injected into the case, and the case was tightly closed and sealed with a caulking machine. Thus, a nonaqueous electrolyte secondary battery (coin shape having a diameter of 20 mm and a thickness of 3.2 mm) of each of Examples 50 to 56 and Comparative Examples 42 to 47 was produced. Symbols and numerical values in parentheses in the column "Positive electrode" in Table 11 represent conductive carbon materials used in the undercoating layers of the positive electrodes.

The charge-discharge test of each of the nonaqueous electrolyte secondary batteries of Examples 50 to 56 and Comparative Examples 42 to 47 was performed by the following method through use of sulfur-modified polyacrylonitrile as a positive electrode active material, and the discharge capacities thereof were calculated. Examples 53, 55, and 56 are not according to the invention. The results are shown in Table 11 below.

### [Charge-discharge Test Method]

Each of the nonaqueous electrolyte secondary batteries was loaded into a thermostat at 30°C, and 10 cycles of a charge-discharge test at a charge rate of 0.1 C and a discharge rate of 0.1 C were performed while a charge final voltage was set to 3.00 V and a discharge final voltage was set to 1.00 V. The discharge capacity of the battery per weight of the positive electrode active material in the tenth charge-discharge cycle was adopted as a discharge capacity (mAh/g).

**Table 11**

| Secondary battery | Positive electrode | Negative electrode | Discharge capacity (mAh/q) |
|---|---|---|---|
| Example 50 | Example 43 (A1) | Lithium metal | 540 |
| Example 51 | Example 44 (A2) | Lithium metal | 545 |
| Example 52 | Example 45 (A3) | Lithium metal | 548 |
| Example 53 | Example 46 (A4) | Lithium metal | 535 |
| Example 54 | Example 47 (A2/B2=97/3) | Lithium metal | 542 |
| Example 55 | Example 48 (A2/B2=93/7) | Lithium metal | 539 |
| Example 56 | Example 49 (A2/B2=85/15) | Lithium metal | 535 |
| Comparative Example 42 | Comparative Example 36 (B1) | Lithium metal | 496 |
| Comparative Example 43 | Comparative Example 37 (B2) | Lithium metal | 529 |
| Comparative Example 44 | Comparative Example 38 (B3) | Lithium metal | 525 |
| Comparative Example 45 | Comparative Example 39 (B4) | Lithium metal | 501 |
| Comparative Example 46 | Comparative Example 40 (B5) | Lithium metal | 522 |
| Comparative Example 47 | Comparative Example 41 | Lithium metal | 248 |

It has been known that although a sulfur-based electrode active material such as a sulfur-modified polyacrylonitrile compound has a high charge-discharge capacity, when the active material is dispersed in an aqueous solvent, the active material may show acidity to corrode a metal collector. Accordingly, in a positive electrode using the sulfur-based electrode active material as its positive electrode active material, inexpensive aluminum foil cannot be used as a collector, and hence stainless steel foil or aluminum foil including a conductive undercoating layer has been used (see, for example, WO 2019/088088 A1). The nonaqueous electrolyte secondary batteries of Examples 50 to 56 including positive electrodes each using the conductive undercoating agent of the present invention show discharge capacities higher than those of the nonaqueous electrolyte secondary batteries of Comparative Examples 42 to 47. This is probably because the corrosion of the aluminum foil in each of the nonaqueous electrolyte secondary batteries of Examples 50 to 56 is suppressed.

### [Test 4: Overdischarge Test]

### [Assembly of Battery]

Each of the disc-shaped negative electrodes of Examples 15 to 21 and Comparative Examples 12 to 17 was used as a working electrode, and a 500-micrometer thick lithium metal cut into a disc shape was used as a counter electrode. The electrodes were held in a case while a glass filter was sandwiched as a separator therebetween. After that, the nonaqueous electrolyte A was injected into the case, and the case was tightly closed and sealed with a caulking machine. Thus, a nonaqueous electrolyte secondary battery (coin shape having a diameter of 20 mm and a thickness of 3.2 mm) of each of Examples 57 to 63 and Comparative Examples 48 to 53 was produced. Correspondences between the produced secondary batteries and the used working electrodes are shown in Table 12. In addition, symbols and numerical values in parentheses in the column "Working electrode (negative electrode)" in Table 12 represent conductive carbon materials used in the undercoating layers of the negative electrodes.

A charge-discharge test was performed by the following method through use of each of the nonaqueous electrolyte secondary batteries of Examples 57 to 63 and Comparative Examples 48 to 53, and their discharge capacities were measured. Examples 60, 62, and 63 are not according to the invention. In addition, each of the nonaqueous electrolyte secondary batteries after the test was disassembled, and the corrosion of its positive electrode was evaluated by the following method. The results are shown in Table 12.

### [Charge-discharge Test Method]

Each of the nonaqueous electrolyte secondary batteries was loaded into a thermostat at 30°C, and 10 cycles of a charge-discharge test at a charge rate of 0.1 C and a discharge rate of 0.1 C were performed while a lower limit voltage was set to 0.005 V and an upper limit voltage was set to 3.80 V. The discharge capacity of the battery per mass of the negative electrode active material in the tenth charge-discharge cycle was adopted as a discharge capacity.

### [Method of evaluating Corrosion]

The working electrodes were removed from the nonaqueous electrolyte secondary batteries after the 10 cycles, and were each immersed in N-methyl-2-pyrrolidone serving as a solvent so that its negative electrode mixture layer and undercoating layer were dissolved therein. The remaining copper foil was observed with a microscope, and was evaluated for its corrosion by the following criteria.
∘: No pitting is observed, or a pitting is observed only slightly and hence the foil is corroded to a small extent.
Δ: A small number of pittings are observed in part of the foil, and hence the foil is corroded.
×: Many pittings are observed in the entire surface of the foil, and hence the foil is corroded to a large extent.

**Table 12**

| Secondary battery | Working electrode (negative electrode) | Counter electrode | Discharge capacity (mAh/g) | Corrosion evaluation |
|---|---|---|---|---|
| Example 57 | Example 15 (A1) | Lithium metal | 341 | ○ |
| Example 58 | Example 16 (A2) | Lithium metal | 347 | ○ |
| Example 59 | Example 17 (A3) | Lithium metal | 348 | ○ |
| Example 60 | Example 18 (A4) | Lithium metal | 336 | ○ |
| Example 61 | Example 19 (A2/B2=97/3) | Lithium metal | 342 | ○ |
| Example 62 | Example 20 (A2/B2=93/7) | Lithium metal | 338 | ○ |
| Example 63 | Example 21 (A2/B2=85/15) | Lithium metal | 332 | ○ |
| Comparative Example 48 | Comparative Example 12 (B1) | Lithium metal | 316 | Δ |
| Comparative Example 49 | Comparative Example 13 (B2) | Lithium metal | 323 | Δ |
| Comparative Example 50 | Comparative Example 14 (B3) | Lithium metal | 315 | Δ |
| Comparative Example 51 | Comparative Example 15 (B4) | Lithium metal | 318 | Δ |
| Comparative Example 52 | Comparative Example 16 (B5) | Lithium metal | 328 | Δ |
| Comparative Example 53 | Comparative Example 17 | Lithium metal | 231 | × |

Graphite and a lithium metal serving as negative electrode active materials are typically used in a negative electrode. In this test, however, to simply observe an influence of an undercoating layer in a collector, a half-cell test in which a negative electrode (working electrode) using graphite as its negative electrode active material and the lithium metal (counter electrode) were combined was performed. The voltages correspond to potentials with respect to the lithium metal, and the upper limit voltage of the graphite negative electrode is typically 3.00 V or less. Accordingly, the upper limit voltage of this test, that is, 3.80 V corresponds to the overdischarge state of the graphite negative electrode.

When a lithium ion secondary battery is discharged to an overdischarge voltage region, its charge-discharge capacity rapidly reduces. The elution of the metal of the collector of the battery is given as one cause for the reduction (see, for example, JP 2002-63940 A). It is found that the values of the discharge capacities of the nonaqueous electrolyte secondary batteries of Examples 57 to 63 including working electrodes each using the conductive undercoating agent of the present invention are each larger than those of the nonaqueous electrolyte secondary batteries of Comparative Examples 48 to 53, and hence the former batteries are highly resistant to overdischarge. In addition, it is found from the corrosion evaluation of the copper foil after the test that in each of Examples, the elution of copper was suppressed as compared to that in each of Comparative Examples.

### [Test 5: High-capacity Electrode Test]

### [Production of Negative Electrode]

Negative electrodes of Examples 64 to 70 and Comparative Examples 54 to 59 were produced by the following method through use of the collectors of Examples 1-Cu to 7-Cu, the collectors of Comparative Examples 1-Cu to 5-Cu, and copper foil as collectors. Examples 67, 69, and 70 are not according to the invention. Correspondences between the produced negative electrodes and the used collectors are shown in Table 13.

80.0 Parts by mass of silicon serving as a negative electrode active material, 10.0 parts by mass of acetylene black (manufactured by Denka Company Limited) serving as a conductive auxiliary, 10.0 parts by mass of polyvinylidene fluoride (manufactured by Kureha Corporation) serving as a binding agent, and 80 parts by mass of N-methyl-2-pyrrolidone serving as a solvent were used, and were mixed with a rotation-revolution mixer under the conditions of a revolution speed of 1,000 rpm and a rotation speed of 500 rpm for 60 minutes. Thus, a slurry for forming a negative electrode mixture layer was prepared. The slurry for forming an electrode mixture layer was applied to the undercoating layer side of each of the collectors including undercoating layers, or only to one surface of the copper foil, by a doctor blade method, and was dried at 90°C for 1 hour. Next, coating treatment with a skeleton-forming agent was performed in conformity with Example 44 of JP 2018-63912 A. That is, a treatment liquid (10 mass% aqueous solution of Na₂O·3SiO₂) was sprayed on the negative electrode after the drying with a spray gun so that the negative electrode mixture layer of the electrode was coated and impregnated with the treatment liquid, followed by heat treatment at 160°C. Thus, the negative electrode was coated with the skeleton-forming agent. After that, the negative electrode was cut into a predetermined size, and was dried in a vacuum at 150°C for 2 hours. Thus, a disc-shaped negative electrode was produced.

**Table 13**

| Negative electrode | Collector |
|---|---|
| Example 64 | Example 1-Cu |
| Example 65 | Example 2-Cu |
| Example 66 | Example 3-Cu |
| Example 67 | Example 4-Cu |
| Example 68 | Example 5-Cu |
| Example 69 | Example 6-Cu |
| Example 70 | Example 7-Cu |
| Comparative Example 54 | Comparative Example 1-Cu |
| Comparative Example 55 | Comparative Example 2-Cu |
| Comparative Example 56 | Comparative Example 3-Cu |
| Comparative Example 57 | Comparative Example 4-Cu |
| Comparative Example 58 | Comparative Example 5-Cu |
| Comparative Example 59 | Copper foil |

### [Assembly of Battery]

Each of the disc-shaped negative electrodes of Examples 64 to 70 and Comparative Examples 54 to 59 was used as a working electrode, and a 500-micrometer thick lithium metal cut into a disc shape was used as a counter electrode. The electrodes were held in a case while a glass filter was sandwiched as a separator therebetween. After that, the nonaqueous electrolyte A was injected into the case, and the case was tightly closed and sealed with a caulking machine. Thus, a nonaqueous electrolyte secondary battery (coin shape having a diameter of 20 mm and a thickness of 3.2 mm) of each of Examples 71 to 77 and Comparative Examples 60 to 65 was produced. Examples 74, 76, and 77 are not according to the invention. Correspondences between the produced secondary batteries and the used working electrodes are shown in Table 14. In addition, symbols and numerical values in parentheses in the column "Working electrode (negative electrode)" in Table 14 represent conductive carbon materials used in the undercoating layers of the negative electrodes.

### [Charge-discharge Test Method]

Each of the nonaqueous electrolyte secondary batteries was loaded into a thermostat at 30°C, and 100 cycles of a charge-discharge test at a charge rate of 0.1 C and a discharge rate of 0.1 C were performed while a lower limit voltage was set to 0.01 V and an upper limit voltage was set to 1.20 V. The ratio (%) of the discharge capacity of the battery in the 100th cycle to the discharge capacity thereof in the tenth charge-discharge cycle is shown in Table 14. A larger value thereof means that the negative electrode thereof is more excellent in charge-discharge cycle characteristic.

**Table 14**

| Secondary battery | Working electrode (negative electrode) | Counter electrode | Discharge capacity ratio (%) |
|---|---|---|---|
| Example 71 | Example 64 (A1) | Lithium metal | 79 |
| Example 72 | Example 65 (A2) | Lithium metal | 82 |
| Example 73 | Example 66 (A3) | Lithium metal | 83 |
| Example 74 | Example 67 (A4) | Lithium metal | 79 |
| Example 75 | Example 68 (A2/B2=97/3) | Lithium metal | 81 |
| Example 76 | Example 69 (A2/B2=93/7) | Lithium metal | 80 |
| Example 77 | Example 70 (A2/B2=85/15) | Lithium metal | 77 |
| Comparative Example 60 | Comparative Example 54 (B1) | Lithium metal | 72 |
| Comparative Example 61 | Comparative Example 55 (B2) | Lithium metal | 73 |
| Comparative Example 62 | Comparative Example 56 (B3) | Lithium metal | 73 |
| Comparative Example 63 | Comparative Example 57 (B4) | Lithium metal | 73 |
| Comparative Example 64 | Comparative Example 58 (B5) | Lithium metal | 75 |
| Comparative Example 65 | Comparative Example 59 | Lithium metal | 70 |

Silicon and a lithium metal serving as high-capacity negative electrode active materials are typically used in a negative electrode. In this test, however, to simply observe an influence of an undercoating layer in a collector, a half-cell test in which a negative electrode (working electrode) using silicon as its negative electrode active material and the lithium metal (counter electrode) were combined was performed.

It is found that the values of the discharge capacities of the nonaqueous electrolyte secondary batteries of Examples 71 to 77 including working electrodes (Si negative electrodes) each using the conductive undercoating agent of the present invention are each larger than those of the nonaqueous electrolyte secondary batteries of Comparative Examples 60 to 65, and hence the former batteries are each excellent in cycle characteristic in a high-capacity electrode.

### [Test 6: All-solid-state Battery Test]

50.0 Parts by mass of Li(Ni_{0.8}Co_{0.1}Mn_{0.1})O₂ serving as a positive electrode active material, 5.0 parts by mass of acetylene black (manufactured by Denka Company Limited) serving as a conductive auxiliary, and 45.0 parts by mass of LPS (Li₂S:P₂S₅=75:25, molar ratio) serving as a solid electrolyte were mixed, and the mixture was molded by press treatment to produce a circular positive electrode mixture layer having a diameter of 10 mm. LPS was molded by press treatment to produce a circular solid electrolyte layer having a diameter of 10 mm. 50.0 Parts by mass of artificial graphite serving as a negative electrode active material and 50.0 parts by mass of LPS serving as a solid electrolyte were mixed, and the mixture was molded by press treatment to produce a circular negative electrode mixture layer having a diameter of 10 mm. After that, the positive electrode mixture layer, the solid electrolyte layer, the negative electrode mixture layer, and a collector were laminated in the stated order, and the laminate was subjected to press molding at a load of 20 kN, followed by tight closing in an all-solid-state battery evaluation cell (manufactured by Hohsen Corp., model: KP-SolidCell). Thus, an all-solid-state secondary battery of each of Examples 78 to 84 and Comparative Examples 66 to 71 was produced. Examples 81, 83, and 84 are not according to the invention. In each of the all-solid-state secondary batteries of this test, the exterior package of the cell functioned as a positive electrode collector, and to evaluate the adaptability of the collector in accordance with the presence or absence and kind of an undercoating layer, the collector was loaded only into the negative electrode of the battery.

### [Charge-discharge Test Method]

Each of the all-solid-state secondary batteries was loaded into a thermostat at 60°C, and 30 cycles of a charge-discharge test at a charge rate of 0.05 C and a discharge rate of 0.05 C were performed while a charge final voltage was set to 4.20 V and a discharge final voltage was set to 2.75 V. The ratio (%) of the discharge capacity of the battery in the 30th cycle to the discharge capacity thereof in the fifth charge-discharge cycle is shown in Table 15. A larger value thereof means that the collector is more excellent in charge-discharge cycle characteristic.

**Table 15**

| Secondary battery | Collector | Discharge capacity ratio (%) |
|---|---|---|
| Example 78 | Example 15 (A1) | 70 |
| Example 79 | Example 16 (A2) | 74 |
| Example 80 | Example 17 (A3) | 76 |
| Example 81 | Example 18 (A4) | 71 |
| Example 82 | Example 19 (A2/B2=97/3) | 73 |
| Example 83 | Example 20 (A2/B2=93/7) | 72 |
| Example 84 | Example 21 (A2/B2=85/15) | 69 |
| Comparative Example 66 | Comparative Example 12 (B1) | 60 |
| Comparative Example 67 | Comparative Example 13 (B2) | 65 |
| Comparative Example 68 | Comparative Example 14 (B3) | 63 |
| Comparative Example 69 | Comparative Example 15 (B4) | 61 |
| Comparative Example 70 | Comparative Example 16 (B5) | 66 |
| Comparative Example 71 | Comparative Example 17 | 42 |

It is found that the values of the discharge capacity ratios of the all-solid-state secondary batteries of Examples 78 to 84 using collectors each using the conductive undercoating agent of the present invention are each larger than those of the all-solid-state secondary batteries of Comparative Examples 66 to 71, and hence the former batteries are each excellent in charge-discharge cycle characteristic.

## Claims

1. A conductive undercoating agent, comprising:
a conductive carbon material;
a binding agent; and
a solvent,
wherein the conductive carbon material is flaked graphite having a carbon/oxygen element molar ratio (C/O ratio) of from 100/0 to 97/3, an average thickness of from 10 nm to 200 nm and a specific surface area of from 10 m²/g to 40 m²/g,
wherein the thickness of the flaked graphite and the specific surface area of the flaked graphite are measured as described in the description.

2. The conductive undercoating agent according to claim 1, wherein the flaked graphite has a bulk density, as measured in conformity with JIS K 1469, of from 0.05 g/cm³ to 0.30 g/cm³.

3. The conductive undercoating agent according to claim 1 or 2, wherein the flaked graphite has a content of iron of less than 30 ppm by mass.

4. The conductive undercoating agent according to any one of claims 1 to 3, wherein the binding agent contains at least one selected from the group consisting of: polyvinylidene fluoride; polytetrafluoroethylene; polyacrylic acid; a styrenebutadiene rubber; a cellulose nanofiber; and carboxymethylcellulose.

5. The conductive undercoating agent according to any one of claims 1 to 4, wherein a mass ratio between the flaked graphite and the binding agent is from 99:1 to 50:50.

6. A collector for a battery, comprising:
metal foil for a battery collector; and
an undercoating layer arranged on at least one surface of the metal foil for a battery collector, the undercoating layer containing the conductive undercoating agent of any one of claims 1 to 5.

7. The collector for a battery according to claim 6, wherein the undercoating layer has a thickness of from 0.3 µm to 5 µm.

8. The collector for a battery according to claim 6 or 7, wherein the metal foil for a battery collector is copper foil or aluminum foil.

9. A positive electrode, comprising:
the collector for a battery of any one of claims 6 to 8; and
a positive electrode mixture layer arranged on the undercoating layer of the collector for a battery.

10. A negative electrode, comprising:
the collector for a battery of any one of claims 6 to 8; and
a negative electrode mixture layer arranged on the undercoating layer of the collector for a battery.

11. A secondary battery, comprising at least one of the positive electrode of claim 9 and the negative electrode of claim 10.

12. An all-solid-state secondary battery, comprising the collector for a battery of any one of claims 6 to 8.

## Patentansprüche

1. Leitfähiges Unterbeschichtungsmittel, umfassend:
ein leitfähiges Kohlenstoffmaterial;
ein Bindemittel; und
ein Lösungsmittel,
wobei das leitfähige Kohlenstoffmaterial flockenförmiger Graphit ist, der ein molares Kohlenstoff/Sauerstoff-Elementverhältnis (C/O-Verhältnis) von 100/0 bis 97/3, eine mittlere Dicke von 10 nm bis 200 nm und eine spezifische Oberfläche von 10 m²/g bis 40 m²/g aufweist,
wobei die Dicke des flockenförmigen Graphits und die spezifische Oberfläche des flockenförmigen Graphits wie in der Beschreibung beschrieben gemessen werden.

2. Leitfähiges Unterbeschichtungsmittel nach Anspruch 1, wobei der flockenförmige Graphit eine gemäß JIS K 1469 gemessene Schüttdichte von 0,05 g/cm³ bis 0,30 g/cm³ aufweist.

3. Leitfähiges Unterbeschichtungsmittel nach Anspruch 1 oder 2, wobei der flockenförmige Graphit einen Eisengehalt von weniger als 30 ppm (Massenanteile) aufweist.

4. Leitfähiges Unterbeschichtungsmittel nach einem der Ansprüche 1 bis 3, wobei das Bindemittel mindestens eine Verbindung, ausgewählt aus der Gruppe, bestehend aus Polyvinylidenfluorid, Polytetrafluorethylen, Polyacrylsäure, Styrol-Butadien-Kautschuk, Cellulose-Nanofasern und Carboxymethylcellulose, enthält.

5. Leitfähiges Unterbeschichtungsmittel nach einem der Ansprüche 1 bis 4, wobei das Massenverhältnis zwischen dem flockenförmigen Graphit und dem Bindemittel 99:1 bis 50:50 beträgt.

6. Stromableiter für eine Batterie, umfassend:
eine Metallfolie für einen Batteriestromableiter; und
eine auf mindestens einer Oberfläche der Metallfolie für einen Batteriestromableiter angeordnete Unterbeschichtungsschicht,
wobei die Unterbeschichtungsschicht das leitfähige Unterbeschichtungsmittel nach einem der Ansprüche 1 bis 5 enthält.

7. Stromableiter für eine Batterie nach Anspruch 6, wobei die Unterbeschichtungsschicht eine Dicke von 0,3 µm bis 5 µm aufweist.

8. Stromableiter für eine Batterie nach Anspruch 6 oder 7, wobei die Metallfolie für einen Batteriestromableiter eine Kupferfolie oder eine Aluminiumfolie ist.

9. Positive Elektrode, umfassend:
den Stromableiter für eine Batterie nach einem der Ansprüche 6 bis 8; und
eine auf der Unterbeschichtungsschicht des Stromableiters für eine Batterie angeordnete positive Elektrodenmischschicht.

10. Negative Elektrode, umfassend:
den Stromableiter für eine Batterie nach einem der Ansprüche 6 bis 8; und
eine auf der Unterbeschichtungsschicht des Stromableiters für eine Batterie angeordnete negative Elektrodenmischschicht.

11. Sekundärbatterie, umfassend mindestens eine der positiven Elektrode nach Anspruch 9 und der negativen Elektrode nach Anspruch 10.

12. Festkörper-Sekundärbatterie, umfassend den Stromableiter für eine Batterie nach einem der Ansprüche 6 bis 8.

## Revendications

1. Agent de sous-couche conducteur, comprenant :
un matériau de carbone conducteur ;
un liant ; et
un solvant,
dans lequel le matériau de carbone conducteur est du graphite en paillettes ayant un rapport molaire d'élément de carbone/oxygène (rapport C/O) allant de 100/0 à 97/3, une épaisseur moyenne allant de 10 nm à 200 nm et une surface spécifique allant de 10 m²/g à 40 m²/g,
dans lequel l'épaisseur du graphite en paillettes et la surface spécifique du graphite en paillettes sont mesurées tel que décrit dans la description.

2. Agent de sous-couche conducteur selon la revendication 1, dans lequel le graphite en paillettes a une masse volumique apparente, telle que mesurée en conformité avec JIS K 1469, allant de 0,05 g/cm³ à 0,30 g/cm³.

3. Agent de sous-couche conducteur selon la revendication 1 ou 2, dans lequel le graphite en paillettes a une teneur en fer de moins de 30 ppm en masse.

4. Agent de sous-couche conducteur selon l'une quelconque des revendications 1 à 3, dans lequel le liant contient au moins un composé sélectionné parmi le groupe constitué du : fluorure de polyvinylidène ; polytétrafluoroéthylène ; de l'acide polyacrylique ; d'un caoutchouc de styrène-butadiène ; d'une nanofibre de cellulose ; et de la carboxyméthylcellulose.

5. Agent de sous-couche conducteur selon l'une quelconque des revendications 1 à 4, dans lequel un rapport massique entre le graphite en paillettes et le liant va de 99/1 à 50/50.

6. Collecteur pour une batterie, comprenant :
une feuille métallique pour un collecteur de batterie ; et
une sous-couche agencée sur au moins une surface de la feuille métallique pour un collecteur de batterie, la sous-couche contenant l'agent de sous-couche conducteur selon l'une quelconque des revendications 1 à 5.

7. Collecteur pour une batterie selon la revendication 6, dans lequel la sous-couche a une épaisseur allant de 0,3 µm à 5 µm.

8. Collecteur pour une batterie selon la revendication 6 ou 7, dans lequel la feuille métallique pour un collecteur de batterie est une feuille de cuivre ou feuille d'aluminium.

9. Électrode positive, comprenant :
le collecteur pour une batterie selon l'une quelconque des revendications 6 à 8 ; et
une couche mélangée d'électrode positive agencée sur la sous-couche du collecteur pour une batterie.

10. Électrode négative, comprenant :
le collecteur pour une batterie selon l'une quelconque des revendications 6 à 8 ; et
une couche mélangée d'électrode négative agencée sur la sous-couche du collecteur pour une batterie.

11. Batterie rechargeable, comprenant au moins une de l'électrode positive selon la revendication 9 et l'électrode négative selon la revendication 10.

12. Batterie rechargeable tout-solide, comprenant le collecteur pour une batterie selon l'une quelconque des revendications 6 à 8.
